# EUROPÄISCHE PATENTANMELDUNG

(11) **EP 1 780 477 A2**
(43) Veröffentlichungstag der Anmeldung: **02.05.2007**
(21) Anmeldenummer: 06450148.9
(22) Anmeldetag: 19.10.2006
(51) Int. Cl.: F24J 2/04, F24J 2/46

(54) **Bausatz zur Herstellung eines Dachelementes bzw. eines Wärmekollektors**

(30) Priorität: 25.10.2005 AT 17452005
(71) Anmelder: Schwarz, Alois, A-6382 Kirchdorf in Tirol (AT)
(72) Erfinder: Schwarz, Alois, A-6382 Kirchdorf in Tirol (AT)
(74) Vertreter: Atzwanger, Richard

(57) **Zusammenfassung**

Bausatz zur Herstellung eines Dachelementes bzw. eines Wärmekollektors [1] bestehend aus einem durch Längsstreben [11] und mit diesen verbundenen Querstreben [12] gebildeten Rahmen mit einer Abdeckplatte sowie gegebenenfalls mit einem Verteilerrohr [21], mit einem Sammlerrohr [22], mit zwischen dem Verteilerrohr [21] und dem Sammlerrohr (22) befindlichen Kollektorrohren [23] und mit Reflektoren [25]. Dabei sind die Längsstreben [11] und die Querstreben [12] miteinander lösbar verbunden, sind die Längsstreben [11] jeweils mit zwei einander zugeordneten Ausnehmungen ausgebildet, in welche Anschlussrohre [21a, 22a] für das Verteilerrohr (21) bzw. das Sammlerrohr [22] einsetzbar sind und sind die Querstreben [12] mit Ausnehmungen ausgebildet, in welche Kollektorrohre [23], Kollektorflächen [24] und Reflektoren (25) einschiebbar sind [Fig. 1].

## Beschreibung

Die gegenständliche Erfindung betrifft einen Bausatz zur Herstellung eines Dachelementes bzw. eines Wärmekollektors bestehend aus einem durch Längsstreben und mit diesen verbundenen Querstreben gebildeten Rahmen, mit einer Abdeckplatte und gegebenenfalls mit einem Verteilerrohr, mit einem Sammlerrohr, mit zwischen dem Verteilerrohr und dem Sammlerrohr befindlichen Kollektorrohren und gegebenenfalls mit Reflektoren.

Bekannte Wärmekollektoren, welche einen festen Rahmen bzw. ein Gehäuse mit Kollektorrohren, Kollektorflächen, Reflektoren und Abdeckungen aufweisen, stellen vollständige Einheiten dar, welche als solche verwendet werden. Dabei besteht für den Anwender nur die Möglichkeit, darüber zu entscheiden, in welcher Anzahl derartige Wärmekollektoren aneinander angeschlossen werden. Da bekannte Wärmekollektoren sämtliche für deren Funktion als Wärmekollektor erforderlichen Bestandteile aufweisen, bedingen sie einen großen Kostenaufwand, welcher auch dann bedingt wird, wenn nur ein Teil der Leistung des Wärmekollektors benötigt wird.

Der gegenständlichen Erfindung liegt die Aufgabe zugrunde, einen Bausatz zur Herstellung eines Dachelementes bzw. eines Wärmekollektors zu schaffen, welcher es dem Anwender ermöglicht, ihn so auszustatten, dass er als Dachelement ohne Kollektorfunktion, als Wärmekollektor mit geringer Leistung und als Wärmekollektor mit großer Leistung verwendbar ist, wobei er zudem vom Benützer auch in unterschiedlichen Größen hergestellt werden kann.

Diese Aufgaben werden erfindungsgemäß dadurch gelöst, dass die Längsstreben und die Querstreben miteinander lösbar verbunden sind, dass die Längsstreben jeweils mit zwei einander zugeordneten Ausnehmungen ausgebildet sind, in welche Anschlussrohre für das Verteilerrohr bzw. das Sammlerrohr einsetzbar sind und dass die Querstreben mit Ausnehmungen ausgebildet sind, in welche Kollektorrohre, Kollektorflächen sowie Reflektoren einschiebbar sind.

Vorzugsweise sind die Längsstreben gleichfalls durch miteinander lösbar verbundene Teile gebildet. Dabei ist vorzugsweise jedem Paar von Teilen der beiden Längsstreben eine Querstrebe zugeordnet, welche mit den einander zugeordneten Teilen der Längsstreben mittels Verrastung od.dgl. verbunden ist.

Nach einer bevorzugten Ausführungsform sind die Teile der Längsstreben jeweils mit einer Ausnehmung für die Aufnahme des dem Verteilerrohr zugeordneten Anschlussrohres und mit einer Ausnehmung für die Aufnahme des dem Sammlerohr zugeordneten Anschlussrohres ausgebildet, wobei die Ausnehmung für die Aufnahme des dem Sammlerrohr zugeordneten Anschlussrohres eine Länge von mindestens dem doppelten Durchmesser des Anschlussrohres aufweist. Vorzugsweise sind die Anschlussrohre als in ihrer Länge veränderbare Rohre ausgebildet.

Weiters sind vorzugsweise die Teile der Längsstreben an den Stirnflächen mit einander zugeordneten Riegelelementen ausgebildet. Zudem sind vorzugsweise die Teile der Längsstreben an ihrer Oberseite mit Bohrungen ausgebildet, in welchen von den Querstreben nach unten abragende Zapfen einsetzbar sind, wodurch die Querstreben mit den Längsstreben zu einem Rahmen verbindbar sind.
Nach einer weiters bevorzugten Ausführungsform sind die Längsstreben mit einem nach unten offenen U-förmigen Profil ausgebildet, welches vorzugsweise an seiner Innenseite mit Querstegen ausgebildet ist.

Weiters ragen vorzugsweise vom Verteilerrohr und vom Sammlerrohr einander zugeordnete Rohrstutzen ab, auf welche die Kollektorrohre abdichtend aufgesetzt sind. Weiters können das Verteilerrohr und das Sammlerrohr mit quer abragenden Laschen ausgebildet sein, an welchen von den Kollektorrohren seitlich abragende Kollektorflächen befestigt sind.

Nach einer weiters bevorzugten Ausführungsform sind in jedes Kollektorrohr eine Düse und ein an seinen beiden Stirnflächen geschlossenes Wellrohr eingesetzt, durch welches die Strömung des Trägermediums im Kollektorrohr längs dessen Innenfläche bewirkt wird. Vorzugsweise steht dieses Wellrohr unter Wirkung einer in das Kollektorrohr eingesetzten Schraubendruckfeder. Weiters können vom Verteilerrohr und vom Sammlerrohr koaxial zu den Kollektorrohren ausgerichtete Rohrstutzen abragen, welche durch eine Abdeckkappe verschlossen sind.

Nach einer weiters bevorzugten Ausführungsform kann zumindest ein Teil der Kollektorflächen ein- oder beidseitig mit photovoltaischen Elementen ausgebildet sein, wodurch mittels eines erfindungsgemäßen Wärmekollektors auch elektrische Energie gewonnen werden kann.

Der Gegenstand der Erfindung ist nachstehend anhand eines in der Zeichnung dargestellten Ausführungsbeispiels näher erläutert. Es zeigen:
- Fig.1: ein erfindungsgemäßes Dachelement bzw. einen Wärmekollektor, in axonometrischer Darstellung;
- Fig.2.: das erfindungsgemäße Dachelement bzw. den Wärmekollektor, in Draufsicht;
- Fig.3 und 3a: Details des erfindungsgemäßen Dachelementes bzw. des Wärmekollektors, jeweils in Seitenansicht;
- Fig.4: das erfindungsgemäße Dachelement bzw. den Wärmekollektor, im Schnitt nach der Linie IV-IV der Fig.2;
- Fig. 5, 5a und 5b: Details des erfindungsgemäßen Dachtelementes bzw. des Wärmekollektors, in axonometrischer Darstellung, im Querschnitt und in Draufsicht;
- Fig.6: einen Bestandteil eines erfindungsgemäßen Dachelementes, in Draufsicht bzw. im Schnitt;
- Fig.6a, 6b und 6c: ein Detail der Fig.6, in axonometrischer Darstellung, in Stirnsicht und in Seitenansicht;
- Fig.7, 7a, 7b, und 7c: weitere Details eines erfindungsgemäßen Dachelementes bzw. des Wärmekollektors, in unterschiedlichen Ausführungsformen, jeweils im Schnitt;
- Fig.8: ein weiteres Detail eines erfindungsgemäßen Dachelementes bzw. des Wärmekollektors, im Schnitt nach der Linie VIII-VIII der Fig. 4; und
- Fig.9: ein Dach, auf welchem ein erfindungsgemäßes Dachelement bzw. ein Wärmekollektor befestigt ist, in abgebrochener axonometrischer Darstellung.

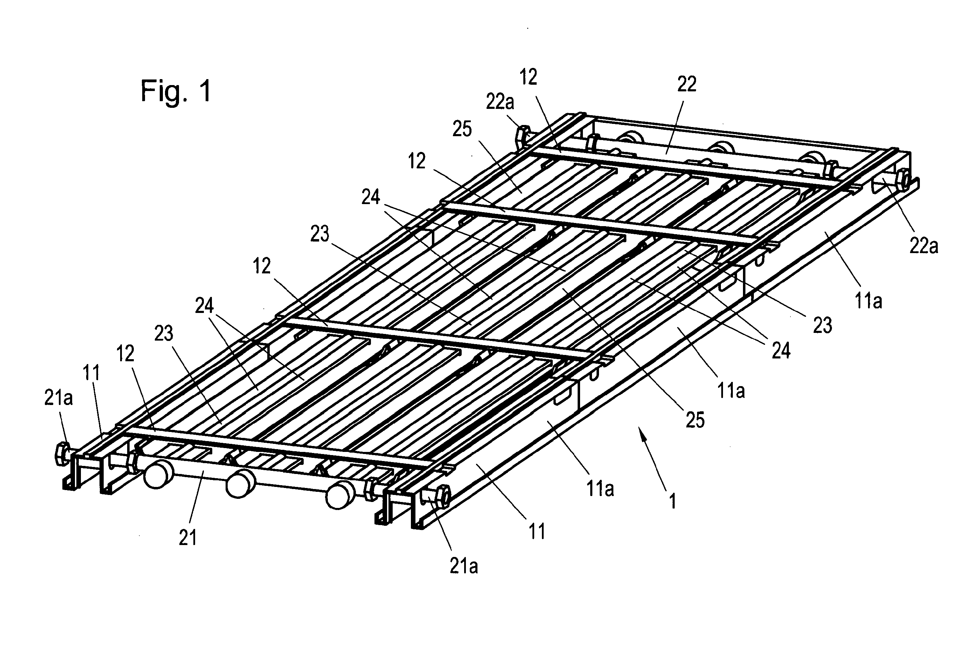

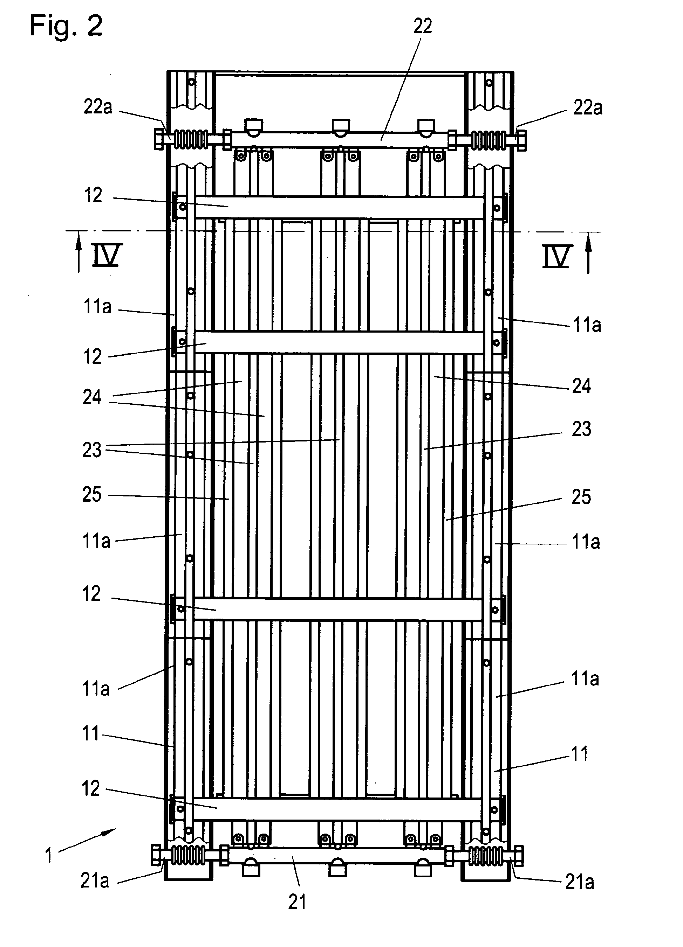

Das in den Fig.1 und 2 dargestellte Dachelement 1 weist einen Rahmen auf, welcher aus zwei Längstreben 11 und aus vier Querstreben 12 besteht. Die Längsstreben 11 sind durch mehrere Teile 11a, welche miteinander lösbar verbunden sind, gebildet. Hierdurch kann der Rahmen in Längsrichtung mit beliebigen Längen ausgebildet werden. Jedem Teil 11a der Längsstrebe 11 ist eine Querstrebe 12 zugeordnet, welche mit den Teilen 11a gleichfalls lösbar verbunden ist. In dem auf einem Dach befestigten Dachelement in Funktion eines Wärmekollektors unteren Bereich desselben erstreckt sich zwischen den beiden Längsstreben 11 ein Verteilerrohr 21 und im oberen Bereich des Rahmens erstreckt sich zwischen den beiden Längsstreben 11 ein Sammlerrohr 22. Das Verteilerrohr 21 und das Sammlerrohr 22 sind an ihren über die Längsstreben 11 des Rahmens hinausragenden Enden mit Anschlussrohren 21 a und 22a für die anschließenden Verteilerrohre bzw. Sammlerrohre von daneben befindlichen Wärmekollektoren ausgebildet. Weiters befinden sich zwischen dem Verteilerrohr 21 und dem Sammlerrohr 22 drei Kollektorrohre 23, welche jeweils mit zwei seitlich abragenden Kollektorflächen 24 ausgebildet sind. Zudem befinden sich unterhalb der Kollektorrohre 23 und der Kollektorflächen 24 jeweils Reflektoren 25.

Wie dies weiters aus Fig.2 ersichtlich ist, sind die die Längsstreben 11 durchsetzenden Anschlussrohre 21a und 22a in ihrer Länge veränderbar ausgebildet, wodurch sie Wärmedehnungen des Verteilerrohres 21 bzw. des Sammlerrohres 22 aufnehmen können.

Die Längsstreben 11 und die Querstreben 12 des Rahmens sowie das Verteilerrohr 21 und das Sammlerrohr 22 sind aus einem Kunststoffmaterial, insbesondere aus Polyphthalamid, hergestellt. Die Kollektorrohre 23 und die Kollektorflächen 24 sind aus eloxiertem Aluminium hergestellt. Die Reflektoren 25 sind aus eloxiertem und poliertem Aluminium hergestellt.

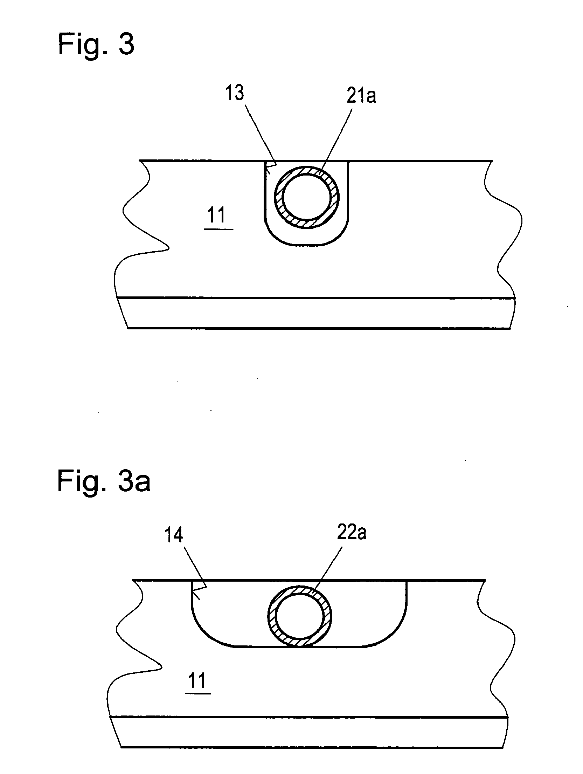

Wie dies aus den Fig.3 und 3a ersichtlich ist, werden die Längsstreben 11 von den Anschlussrohren 21a und 22a in Ausnehmungen 13 und 14 durchsetzt, wobei die Breite der Ausnehmung 13 für das Anschlussrohr 21a des Verteilerrohres 21 dem Durchmesser der Anschlussverschraubung angenähert gleich ist, wogegen die Breite der Ausnehmung 14 für das Anschlussrohr 22a des Sammlerrohres 22 wesentlich größer ist, wodurch das Sammlerrohr 22 mittels der Anschlussrohre 22a in den Längsstreben 11 so geführt ist, dass es Wärmebewegungen ausführen kann.
Das Verteilerrohr 21 und das Sammlerrohr 22 sind durch die Kollektorrohre 23 miteinander verbunden.

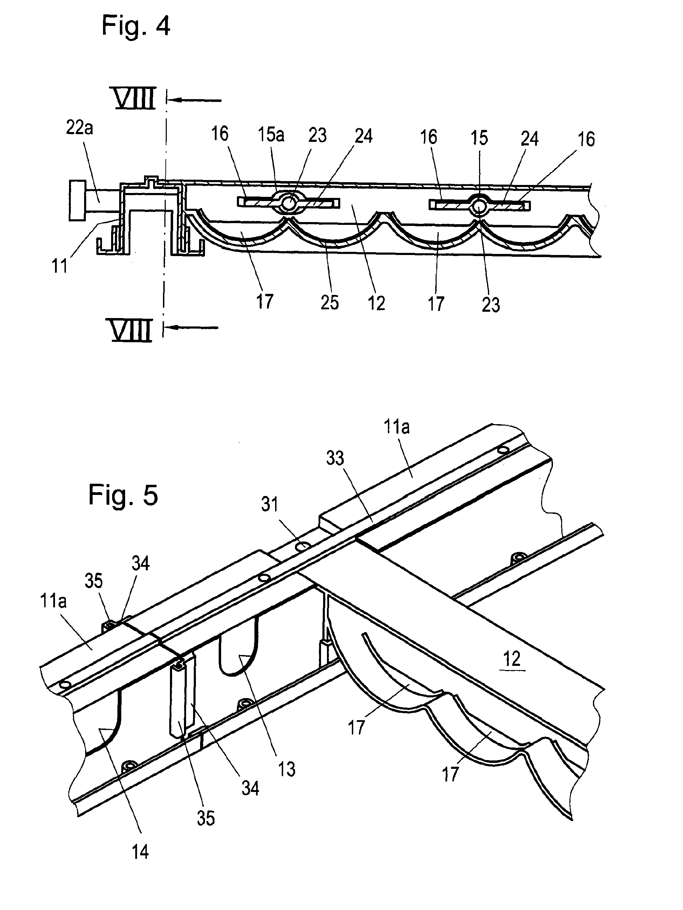

Wie dies aus Fig.4 ersichtlich ist, sind die Querstreben 12 einerseits mit kreisförmigen bzw. ovalen Ausnehmungen 15 bzw. 15a und andererseits mit an diese anschließenden, schlitzartigen Ausnehmungen 16 ausgebildet, welche von den Kollektorrohren 23 und den Kollektorflächen 24 durchsetzt sind, wodurch diese Bauteile in ihrer Lage gehalten sind. Dabei weist die mittlere Ausnehmung 15 einen kreisrunden Querschnitt auf, wogegen die beiden seitlichen Ausnehmungen 15a einen ovalen Querschnitt aufweisen. Dies ist deshalb erforderlich, damit die Kollektorrohre 23 auseinander bzw. zueinander Wärmebewegungen ausführen können.

Unterhalb der Kollektorrohre 23 bzw. der Kollektorflächen 24 befinden sich die Reflektoren 25, welche an den Querstreben 12 befestigt sind. Hierfür sind die Querstreben 12 mit bogenförmig gekrümmten Schlitzen 17, welche sich zu ihrem mittleren Bereich hin vergrößern, ausgebildet, in welche die Reflektoren 25 eingeschoben sind, wobei sie an den Querstreben 12 durch Verrastung od.dgl. gehalten sind und durch welche hindurch sowohl eine Belüftung erfolgt als auch ein Abfluss von Kondenswasser erfolgen kann.

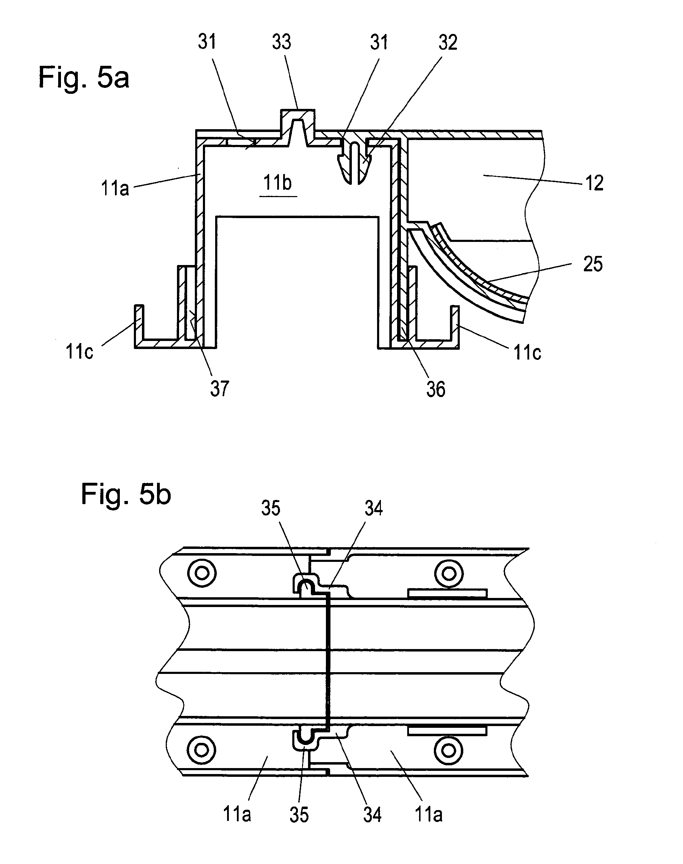

Aus den Fig. 5, 5a und 5b sind die Verbindungen der Querstreben 12 mit den Teilen 11a der Längsstreben 11 ersichtlich. Hierfür sind die Teile 11a der Längsstreben 11 in denjenigen Bereichen, an welchen die Querstreben 12 befestigt werden, mit Bohrungen 31 ausgebildet, welchen an den Enden der Längsstreben 12 befindliche Rastzapfen 32 zugeordnet sind. Hierdurch können die Längsstreben 11 mit den Querstreben 12 durch Verrastung miteinander verbunden werden. Weiters sind die Längsstreben 11 mit einer nach oben abragenden Leiste 33 ausgebildet, welche als Anschlag für eine oberhalb der Kollektorrohre 23 vorgesehene Abdeckplatte aus durchsichtigem Material, insbesondere aus Glas, dient.

Weiters sind die Teile 11a der Längsstreben 11 an ihren Stirnflächen mit einander zugeordneten Riegelementen 34 und 35 ausgebildet, mittels welcher die beiden Teile 11a durch ein Verschieben quer zu ihrer Längsrichtung miteinander zu den Längsstreben 11 verbunden werden können. Hierfür dienen weiters auch von den Querstreben 12 abragende Wandteile 36, welche in an den Teilen 11a der Längsstreben 11 vorgesehene Taschen 37 einsetzbar sind.

Ein derartiger Wärmekollektor wird dadurch hergestellt, dass mehrere Teile 11a durch Verriegelung miteinander zu einer Längsstrebe 11 mit beliebiger Länge zusammengefügt werden und dass zwei derartige Längsstreben 11 mittels Querstreben 12 gleichfalls durch Verrastung zu einem Rahmen zusammengefügt werden. Dabei entspricht die Anzahl der Querstreben 12 der Anzahl der Teile 11a der beiden Längsstreben 11. In weiterer Folge werden in die Ausnehmungen 15 und 15a der Querstreben 12 die Kollektorrohre 23 eingesetzt, welche mit oder ohne Kollektorflächen 24 ausgebildet sein können. Soferne Kollektorflächen 24 vorgesehen sind, werden diese in die Schlitze 16 eingesetzt. Weiters werden durch die Ausnehmungen 17 der Querstreben 12 hindurch Reflektoren 25 eingeschoben. Zudem werden das Verteilerrohr 21 und das Sammlerrohr 22 über die Kollektorrohre 23 miteinander verbunden.

Schließlich werden durch die in den Längsstreben 11 befindlichen Ausnehmungen 13 bzw. 14 hindurch die in ihrer Länge veränderbaren Anschlussrohre 21 a und 22a eingesetzt, welche dazu dienen, mehrere derartige Wärmekollektoren 1 miteinander zu verbinden. Hierdurch ist ein betriebsfähiger Wärmekollektor 1 geschaffen.

Aus Fig.5a ist weiters ersichtlich, dass Teile 11a der Längsstreben 11, welche mit einem nach unten offenen U-förmigen Querschnitt ausgebildet sind, an ihrer Innenseite mit Querstegen 11b ausgebildet sind, welche der Verstärkung der Längsstreben 11 dienen. Zudem sind die Teile 11a der Längsstreben 11 mit nach außen abragenden U-profilierten Schenkeln 11c ausgebildet, welche als Rinnen für auftretendes Kondenswasser dienen.

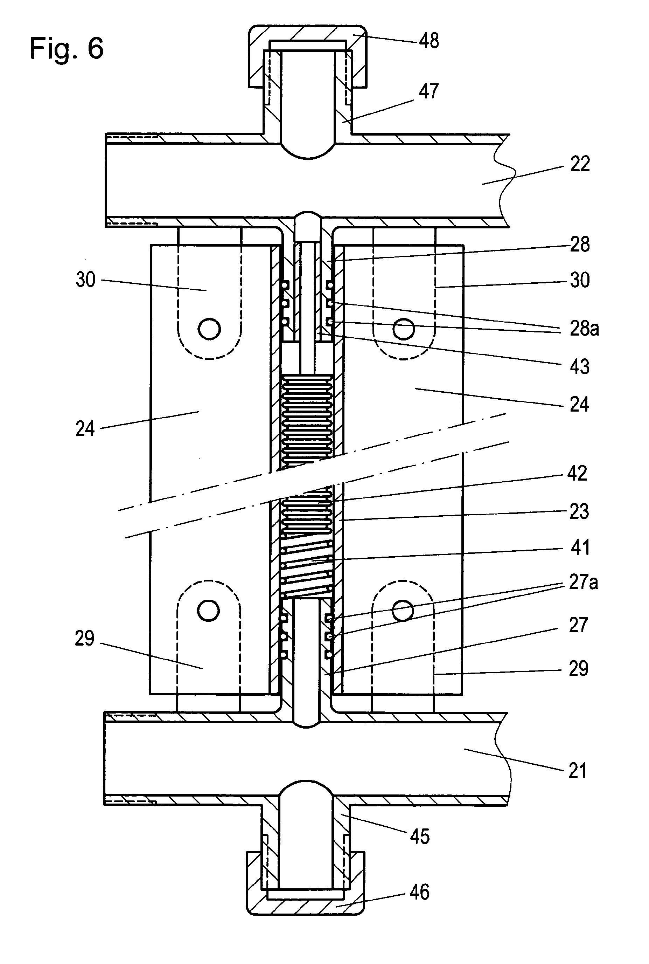

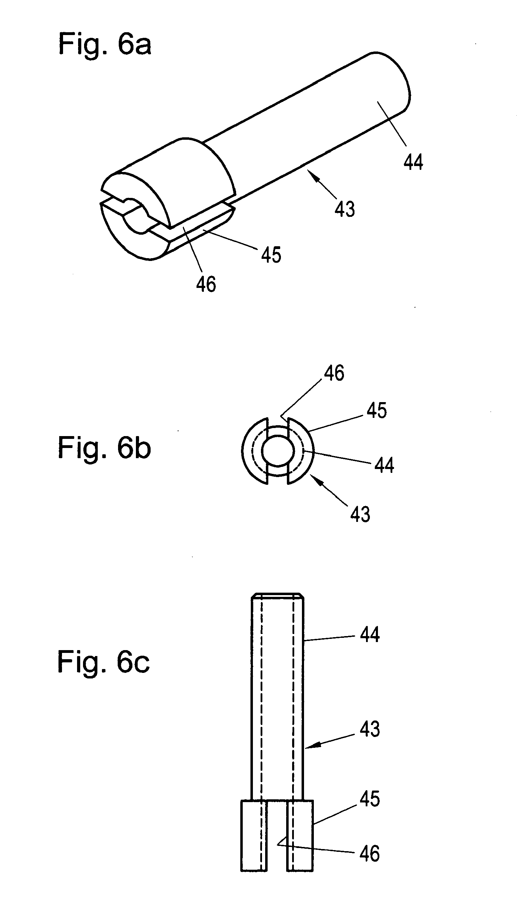

Wie dies aus Fig.6 ersichtlich ist, sind das Verteilerrohr 21 und das Sammlerrohr 22 mit quer abragenden Rohrstutzen 27 und 28 ausgebildet, welche in die Kollektorrohre 23 einragen und gegenüber diesen mittels Dichtungsringen 27a und 28 abgedichtet sind. Zudem sind das Verteilerrohr 21 und das Sammlerrohr 22 mit quer abragenden Laschen 29 und 30 ausgebildet, mit welchen die Kollektorflächen 24 z.B. durch Vernietung oder Verschraubung verbunden sind. Hierdurch können das Verteilerrohr 21 und das Sammlerrohr 22 mittels der Kollektorrohre 23 und Kollektorflächen 24 miteinander verbunden werden.

Innerhalb der Kollektorrohre 23 befinden sich eine Druckfeder 41, ein aus Metall hergestelltes, an seinen beiden Stirnseiten verschlossenes Wellrohr 42 und eine Düse 43. Zudem sind das Verteilerrohr 21 und das Sammlerrohr 22 koaxial zu den Anschlussrohren 27 und 28 mit von der gegenüberliegenden Seite abragenden Rohrstücken 45 und 47 ausgebildet, welche durch Abdecklappen 46 und 48 abgeschlossen sind.

Wie dies aus den Fig.6a, 6b und 6c ersichtlich ist, besteht die Düse 43 aus einem ersten Teil 44, dessen Außendurchmesser dem Innendurchmesser des Rohrstückes 28 gleich ist, und einem zweiten Teil 45, dessen Außendurchmesser dem Innendurchmesser des Kollektorrohres 23 gleich ist. Die Düse 43 dient dazu, die Menge des durch das Kollektorrohr 23 hindurchströmenden Trägermediums, insbesondere Wasser, nach Tickelmann zu regulieren. Hierfür wird der Innendurchmesser des Rohrstückes der Düse 43 in Abhängigkeit von der Länge des Kollektorrohres 23 bestimmt. Durch den Querschlitz 46 der Düse 43 wird der erforderliche Strömungskanal gebildet. Das Wellrohr 42 dient dazu, das das Kollektorrohr 23 durchströmende Trägermedium längs der Innenfläche des Kollektorrohres 23 zu führen, wodurch eine sehr hohe Wärmeableitung von den Kollektorflächen 24 bewirkt wird. Zudem dient das Wellrohr 42 als Schutz gegen Beschädigungen des Kollektorrohres 23 infolge Einfrieren des Wärmeträgers bei allenfalls extrem tiefen Temperaturen. Dies wird dadurch erzielt, dass bei einem Einfrieren des Trägermediums das Wellrohr 42 zusammengepresst wird, wodurch eine Beschädigung des Kollektorrohres 23 vermieden wird.
Die Rohrstutzen 27 und 28 dienen dazu, in das Verteilerrohr 21 bzw. in das Sammlerrohr 22 Messgeräte einsetzen zu können. Zudem besteht die Möglichkeit, im Falle, dass das zugeordnete Kollektorrohr 23 eine Undichtheit aufweist, in dieses von beiden Seiten her Dichtungspfropfen einzusetzen, wodurch dieses Kollektorrohr 23 verschlossen wird.

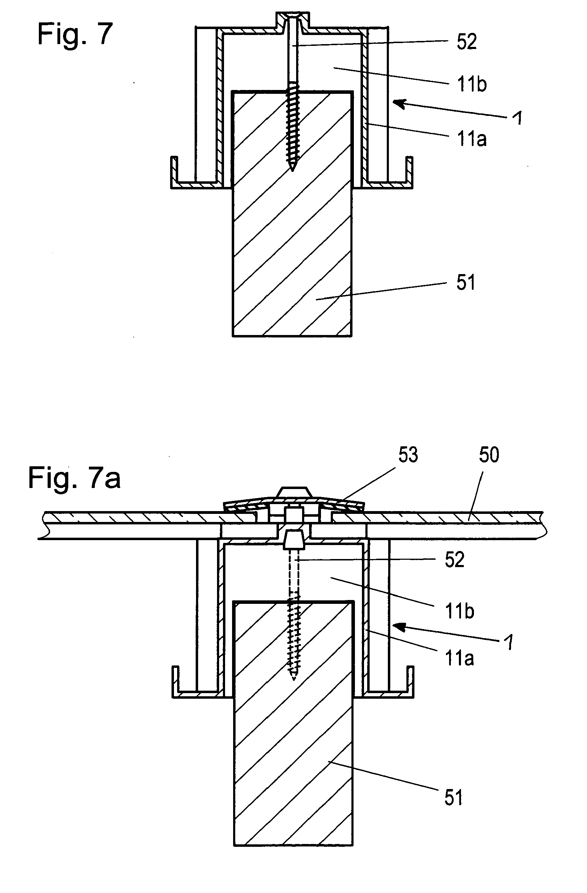

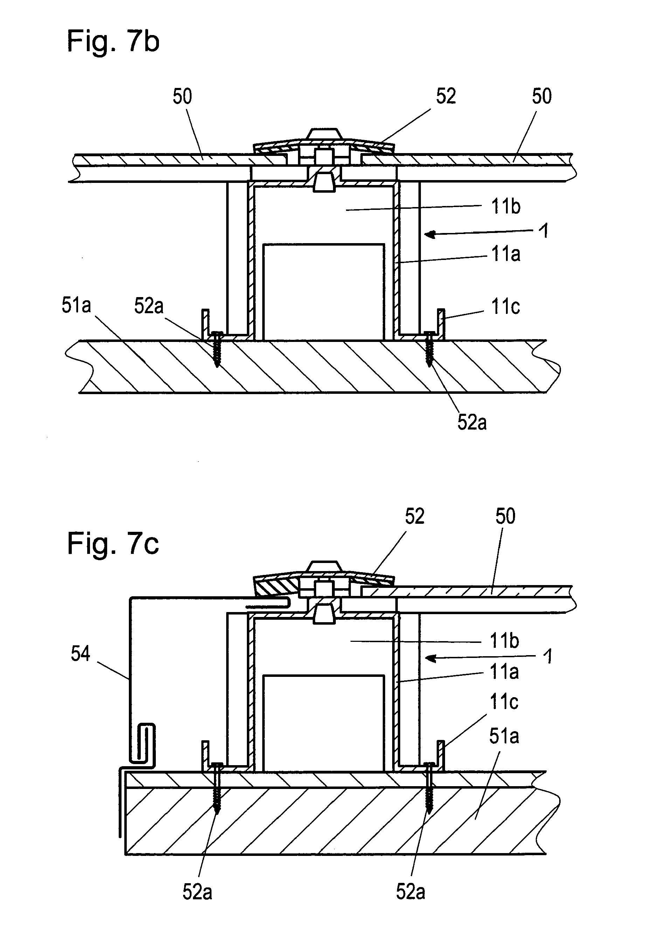

In den Fig.7 bis 7d sind mehrere Varianten dargestellt, in welcher Weise ein erfindungsgemäßes Dachelement bzw. ein Wärmekollektor 1 auf einem Balken 51 mittels Schrauben 52 befestigt werden kann.
In Fig.7a ist zudem dargestellt, dass eine an der Oberseite eines erfindungsgemäßen Dachelementes bzw. Wärmekollektors 1 befindliche Abdeckplatte 50 mittels einer Spannleiste 53 fixierbar ist.
In Fig.7b ist dargestellt, dass die Längsstreben 11 des erfindungsgemäßen Dachelementes bzw. Wärmekollektors 1 mittels Schrauben 52a, welche die U-förmig profilierten Schenkel 11c durchsetzen, an einer Schalung 51a, einer Dachfläche oder einer Wandfläche befestigbar sind.
In Fig.7c ist zusätzlich ein seitlich des erfindungsgemäßen Dachelementes bzw. Wärmekollektors 1 angeordnetes Einfassungsblech 54 dargestellt.

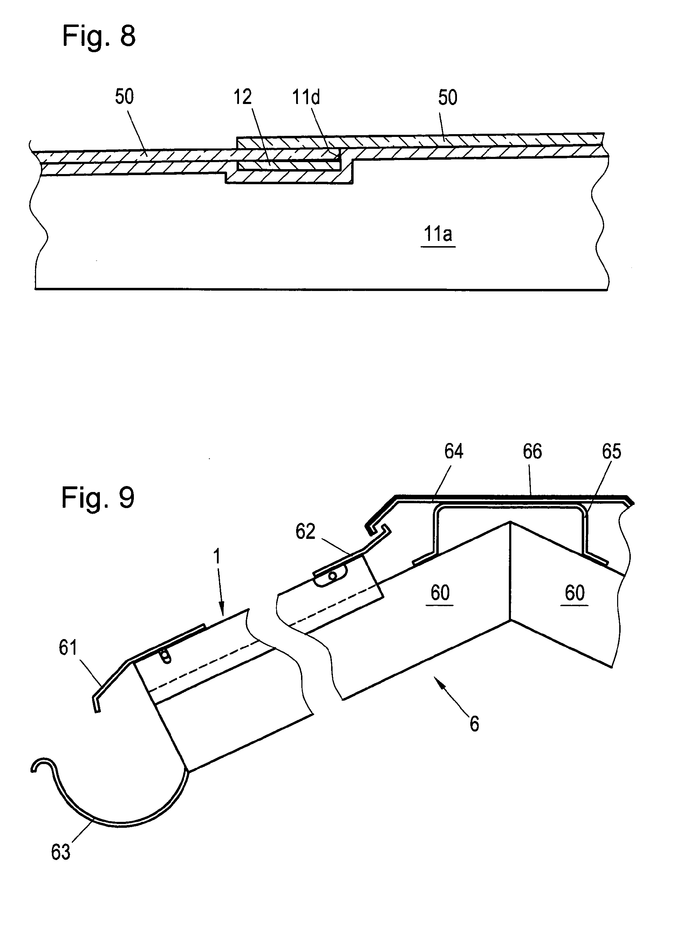

Wie dies aus Fig.8 ersichtlich ist, ist die Oberseite der Teile 11a der Längsstreben 11 in den Bereichen der Querstreben 12 mit Absätzen 11d ausgebildet, welche dazu dienen, auf den Dachelementen befindliche Glasplatten 50 einander überlappend auflegen zu können.

In Fig.9 ist ein Dach 6 dargestellt, auf welchem sich erfindungsgemäße Dachelemente 1 befinden. Dieses Dach weist Dachbalken 60 auf, an welchen erfindungsgemäße Dachelemente 1 befestigt sind, welche die Dachhaut bilden. An den Seitenrändern der Dachelemente bzw. Wärmekollektoren 1 sind Verblechungen 61 und 62 vorgesehen. Die Verblechung 61 mündet in einer Dachrinne 63. Oberhalb der Verblechung 62 befindet sich eine längs des Dachfirstes verlaufende weitere Verblechung 64, welche die Verblechung 62 so übergreift, dass zwischen diesen beiden Verblechungen eine Luftströmung ermöglicht wird. Hierdurch wird eine der Norm entsprechende Belüftung der Wärmekollektoren gewährleistet. Die Verblechung 64, welche von Stegen 65 getragen ist, ist mit einer Dachpappe 66 belegt.

Ein erfindungsgemäßes Dachelement bzw. ein Wärmekollektor kann vom Anwender durch Verriegelung bzw. Verrastung der einzelnen Bauteile miteinander in beliebigen Längen hergestellt werden. Sofern ein derartiges Dachelement ohne Kollektorrohre verlegt wird, erfüllt es nur die Funktion der Abdeckung. Sofern es mit Kollektorrohren ausgebildet wird, stellt er einen Wärmekollektor dar. Sofern die Leistung dieses Wärmekollektors vergrößert werden soll, wird er mit solchen Kollektorrohren ausgestattet, welche mit Kollektorflächen ausgebildet sind. Sofern eine weitere Leistungssteigerung erzielt werden soll, wird dieser Wärmekollektor mit Reflektoren ausgebildet.

Da ein erfindungsgemäßes Dachelement bzw. ein Wärmekollektor nach Art eines Baukastensystems hergestellt wird, liegt es im Belieben des Benützers es bzw. ihn so auszubilden, dass den bestehenden Erfordernissen entsprochen wird. Dessen ungeachtet kann ein derartiges Dachelement jederzeit ergänzt werden, um es als Wärmekollektor verwenden zu können. Im Falle von Undichtheiten können einzelne Kollektorrohre verschlossen und dadurch außer Betrieb genommen werden.
Aufgrund des in den Kollektorrohren befindlichen Wellrohres sowie der in die Kollektorrohre eingesetzten Düsen werden hohe Strömungsgeschwindigkeiten und eine optimale Wärmeübertragung von den Kollektorflächen auf das Trägermedium erzielt. Zudem wird durch das eingesetzte Wellrohr ein Schutz gegen Beschädigungen aufgrund des Einfrierens des Trägermediums bei sehr tiefen Temperaturen bewirkt.

Mittels eines erfindungsgemäßen Dachelementes bzw. Wärmekollektors kann ein Dach vollständig belegt werden, wobei auf eine übliche Dachdeckung verzichtet werden kann. Durch eine derart gebildete Dachdeckung kann der gesamte Wärmebedarf eines Gebäudes gedeckt werden.
Sofern weiters die Kollektorelemente mit photovoltaischen Elementen ausgebildet werden, kann hierdurch auch elektrische Energie gewonnen werden.

Ein erfindungsgemäßer Wärmekollektor ist insbesondere zur Verlegung auf einem Dach bestimmt. Er kann jedoch auch an anderen Stellen vorgesehen werden.

## Patentansprüche

1. Bausatz zur Herstellung eines Dachelementes bzw. eines Wärmekollektors bestehend aus einem durch Längsstreben [11] und mit diesen verbundenen Querstreben [12] gebildeten Rahmen mit einer Abdeckplatte (50) sowie gegebenenfalls mit einem Verteilerrohr [21], mit einem Sammlerrohr [22], mit zwischen dem Verteilerrohr [21] und dem Sammlerrohr (22) befindlichen Kollektorrohren (23) und mit Reflektoren (25), **dadurch gekennzeichnet, dass** die Längsstreben [11] und die Querstreben (12) miteinander lösbar verbunden sind, dass die Längsstreben [11] jeweils mit zwei einander zugeordneten Ausnehmungen (13, 14) ausgebildet sind, in welche Anschlussrohre (21 a, 22a) für das Verteilerrohr (21) bzw. das Sammlerrohr (22) einsetzbar sind und dass die Querstreben (12) mit Ausnehmungen (15, 16) ausgebildet sind, in welche Kollektorrohre (23), Kollektorflächen (24) und Reflektoren (25) einschiebbar sind.

2. Bausatz nach Patentanspruch 1, **dadurch gekennzeichnet, dass** die Längsstreben [11] durch miteinander gleichfalls lösbar verbundene Strebenteile [11a] gebildet sind.

3. Bausatz nach Patentanspruch 2, **dadurch gekennzeichnet, dass** jedem Paar von Teilen [11a] der beiden Längsstreben (11) eine Querstrebe (12) zugeordnet ist, welche mit den einander zugeordneten Teilen (11a) der Längsstreben mittels Verrastung od.dgl. verbunden ist.

4. Bausatz nach einem der Patentansprüche 1 bis 3, **dadurch gekennzeichnet, dass** die Teile (11a) der Längsstreben (11) jeweils mit einer Ausnehmung (13) für die Aufnahme des dem Verteilerrohr (21) zugeordneten Anschlussrohres (21a) und mit einer Ausnehmung (14) für die Aufnahme des dem Sammlerohr (22) zugeordneten Anschlussrohres (22a) ausgebildet sind, wobei die Ausnehmung (14) für die Aufnahme des dem Sammlerrohr (22) zugeordneten Anschlussrohres (22a) eine Länge von mindestens dem doppelten Durchmesser des Anschlussrohres (22a) aufweist.

5. Bausatz nach einem der Patentansprüche 1 bis 4, **dadurch gekennzeichnet, dass** die Anschlussrohre (21a, 22a) als in ihrer Länge veränderbare Rohre ausgebildet sind.

6. Bausatz nach einem der Patentansprüche 1 bis 5, **dadurch gekennzeichnet, dass** die Teile (11a) der Längsstreben (11) an den Stirnflächen mit einander zugeordneten Riegelelementen (34, 35) ausgebildet sind.

7. Bausatz nach einem der Patentansprüche 1 bis 6, **dadurch gekennzeichnet, dass** die Teile (11a) der Längsstreben (11) an ihrer Oberseite mit Bohrungen (31) ausgebildet sind, in welche von den Querstreben (12) nach unten abragende Zapfen (32) einsetzbar sind, wodurch die Querstreben (12) mit den Längsstreben (11) zu einem Rahmen verbindbar sind.

8. Bausatz nach einem der Patentansprüche 1 bis 7, **dadurch gekennzeichnet, dass** die Längsstreben (11) mit einem nach unten offenen U-förmigen Profil ausgebildet sind, welches vorzugsweise an seiner Innenseite mit Querstegen (11b) ausgebildet ist.

9. Bausatz nach einem der Patentansprüche 1 bis 8, **dadurch gekennzeichnet, dass** vom Verteilerrohr (21) und vom Sammlerrohr (22) einander zugeordnete Rohrstutzen (27, 28) abragen, auf welche die Kollektorrohre (23) abdichtend aufgesetzt sind.

10. Bausatz nach einem der Patentansprüche 1 bis 9, **dadurch gekennzeichnet, dass** das Verteilerrohr (21) und das Sammlerrohr (22) mit quer abstehenden Laschen (29) ausgebildet sind, an welchen von den Kollektorrohren (23) seitlich abragende Kollektorflächen (24) befestigt sind.

11. Bausatz nach einem der Patentansprüche 1 bis 10, **dadurch gekennzeichnet, dass** in jedes Kollektorrohr (23) ein an seinen beiden Stirnflächen geschlossenes Wellrohr (42) eingesetzt ist, durch welches die Strömung des Trägermediums im Kollektorrohr (23) längs dessen Innenfläche bewirkt wird.

12. Bausatz nach einem der Patentansprüche 1 bis 11, **dadurch gekennzeichnet, dass** das Wellrohr (42) unter Wirkung einer in die Kollektorrohre [23] eingesetzten Schraubendruckfeder [41] steht.

13. Bausatz nach einem der Patentansprüche 1 bis 12, **dadurch gekennzeichnet, dass** in die Kollektorrohre (23) Düsen (42) zur Steuerung des Durchflusses des Trägermediums eingesetzt sind.

14. Bausatz nach einem der Patentansprüche 1 bis 13, **dadurch gekennzeichnet, dass** vom Verteilerrohr [21] und vom Sammlerrohr [22] koaxial zu den Kollektorrohren [23] ausgerichtete Rohrstutzen (45, 47) abragen, welche durch eine Abdeckkappe (46, 48) verschlossen sind.

15. Bausatz nach einem der Patentansprüche 1 bis 14, **dadurch gekennzeichnet, dass** zumindest ein Teil der Kollektorflächen (24) mit photovoltaischen Elementen ausgebildet ist.

16. Bausatz nach einem der Patentansprüche 8 bis 15, **dadurch gekennzeichnet, dass** die Schenkel der Längsstreben (11) an ihren freien Enden mit nach außen abragenden Rinnen (11c) ausgebildet sind.
